# EUROPÄISCHE PATENTSCHRIFT

(11) **EP 1 108 464 B1**
(45) Veröffentlichungstag und Bekanntmachung des Hinweises auf die Patenterteilung: **03.03.2004**
(21) Anmeldenummer: 00890367.6
(22) Anmeldetag: 07.12.2000
(51) Int. Cl.: B01F 5/06, B29B 7/00, B29B 7/32, B29C 47/64, B29C 47/36, B29C 47/70

(54) **Verfahren zum Durchmischen eines Schmelzenstromes aus Kunststoff**
Process for mixing a plastic melt stream
Procédé de mélange d'un flux en matière plastique

(30) Priorität: 17.12.1999 AT 212799
(43) Veröffentlichungstag der Anmeldung: 20.06.2001
(73) Patentinhaber: a+g Extrusion Technology GmbH, 4061 Pasching (AT)
(72) Erfinder: Krumböck, Erwin Dr., 4052 Ansfelden (AT); Gasselseder, Wolfgang, 4181 Oberneukirchen (AT)
(74) Vertreter: Hübscher, Gerhard, Dipl.-Ing.

(56) Entgegenhaltungen:
- DE-A- 1 901 013
- DE-A- 2 352 480
- US-A- 3 239 197
- US-A- 3 711 067
- US-A- 4 170 446

## Beschreibung

Die Erfindung bezieht sich auf ein Verfahren zum Durchmischen eines Schmelzenstromes aus Kunststoff, insbesondere Polyvinylchlorid (PVC), sowie auf einen Mischer zur Durchführung dieses Verfahrens mit einem in einen Strömungskanal einbindbaren Mischkörper.

Um bei Extrusionsprozessen die Homogenität der entstehenden Schmelze zu erhöhen und damit die Qualität des extrudierten Produktes zu verbessern, ist es bekannt, die Schmelze auf ihrem Weg zwischen Extruder und Extrusionsdüse zu durchmischen, wobei meist statische Mischer, also Mischer mit stehenden Mischeinrichtungen, deren Mischeffekt lediglich infolge des Schmelzendurchströmens auftritt, Verwendung finden. Sind die Kunststoffschmelzen bei Verarbeitungstemperatur im Extrusions- oder Spritzgußprozeß thermisch ausreichend stabil, können übliche Mischverfahren eingesetzt werden, bei denen Einzelmengen der Schmelzen deutlich länger im Mischer verbleiben als die durchschnittliche Schmelzenverweilzeit, ohne dadurch geschädigt zu werden. Einige Kunststoffschmelzen, insbesondere auch PVC-Schmelzen, sind allerdings sehr temperaturempfindlich, so daß es bei unterschiedlichen Verweilzeiten von Schmelzenteilen während des Mischvorganges zu Schädigungen kommt. Da fast alle bekannten Mischer Zonen aufweisen, die eine lange Verweilzeit für Einzelmengen verursachen, beispielsweise quer zur Hauptströmungsrichtung verlaufende Kanten des Mischers, ist zu befürchten, daß sich der Kunststoff in diesen Zonen festsetzt, wodurch bereits nach kurzer Zeit eine thermische Schädigung der heiklen Schmelze eintritt.

PVC wird zur Profilherstellung überwiegend im Extrusionsprozeß mit Doppelschnecken-Extrudem verarbeitet, wobei sich eine durchschnittliche Massetemperatur von etwa 190-200°C einstellt, welche Massetemperatur unter üblichen Betriebsbedingungen örtliche Temperaturunterschiede von etwa 20°C über den Strömungsquerschnitt aufweist. Da die PVC-Schmelze im Verarbeitungsbereich der Extrusionsdüsen laminar strömt, ist ein Temperaturausgleich nur über die innere Wärmeleitung möglich, wofür aber keine ausreichende Zeit zur Verfügung steht, so daß die Düsen von einer PVC-Schmelze durchströmt werden, bei der erhebliche örtliche Temperaturunterschiede auftreten. Die Strömungsgeschwindigkeit der Schmelze im Düsenbereich hängt nun weiters von der Geometrie des Strömungskanals, dem Massedruck und den rheologischen Eigenschaften der Schmelze ab, welche rheologischen Eigenschaften wesentlich von der Temperatur bestimmt werden, was dazu führt, daß Wanddicken des extrudierten Profils deutliche Unterschiede aufweisen, auch wenn aufgrund der örtlichen Geometrie des Strömungskanals für eine gleiche Wanddicke gesorgt wäre. Die Ursache hiefür ist in der örtlichen Massetemperatur zu suchen, denn bei höherer Massetemperatur ergibt sich eine höhere Strömungsgeschwindigkeit und damit eine stärkere Wanddicke des Profils trotz gleicher Geometrie (Spaltweite) des Strömungskanals als bei niedrigerer Massetemperatur. Da Profile für Fenster od. dgl. enge Toleranzen erfordern, ist demnach bisher ein erheblicher Aufwand erforderlich, um die durch Temperaturunterschiede bedingten Wanddickenabweichungen durch Verändern der Spaltweiten in den Extrusionsdüsen auszugleichen. Erschwerend kommt hinzu, daß ein und dieselbe Extrusionsdüse auf unterschiedlichen Extrudern unterschiedliche Wanddicken ergibt und daher stets eine Anpassung der Düsen an den gerade verwendeten Extruder erforderlich ist. Ein Einsatz des gleichen Extrusionswerkzeuges bei unterschiedlichen Extrudern ist somit bisher zwangsweise mit Qualitätseinbußen verbunden.

Der Erfindung liegt daher die Aufgabe zugrunde, ein Verfahren der eingangs geschilderten Art anzugeben, das eine ausreichende und vor allem schädigungsfreie Durchmischung auch temperaturempfindlicher Kunststoffschmelzen erlaubt und die aus dem Extruder kommenden Schmelzenströme hinsichtlich der vorhandenen Temperaturunterschiede ausgleicht, so daß der Extrusionsdüse eine homogene Schmelze bereitgestellt werden kann. Damit ist die Voraussetzung gegeben, Wanddickenabweichungen bei neuen Extrusionsdüsen wesentlich zu reduzieren und den Abstimmungsaufwand für die Düsen deutlich zu verringern, sowie die Empfindlichkeit gegenüber unterschiedlichen Extrudern herabzusetzen und in der Praxis häufig sogar vemachlässigbar zu machen, wodurch die Düsen auch auf unterschiedlichen Extrusionslinien eingesetzt werden können, was die Logistik vereinfacht und die Auslastungsmöglichkeiten der Extrusionslinien zu optimieren erlaubt. Darüber hinaus soll ein Mischer geschaffen werden, der eine einfache und zweckmäßige Durchführung des Verfahrens ermöglicht.

Die Erfindung löst diese Aufgabe dadurch, daß der Schmelzenstrom in Teilströme aufgeteilt wird, welche Teilströme jeweils unabhängig voneinander um in Strömungsrichtung verlaufende Achsen verdreht und dann wieder zu einem gemeinsamen Schmelzenstrom vereint werden. Durch das Aufteilen des Schmelzenstromes in einzelne Teilströme, die in sich gedreht und dann wieder zusammengeführt werden, kommen nach dem Durchmischen stets Schmelzenbereiche miteinander in Kontakt, die vor dem Mischen voneinander beabstandet waren, und über den nunmehr engen Kontakt und die kurzen Entfernungen können sich vorhandene Temperaturunterschiede vergleichsweise schnell ausgleichen. Dabei werden Stagnationszonen vermieden und es ergibt sich eine Mischwirkung vor allem in radialer Richtung, wodurch keine Gefahr einer Schädigung auch thermisch instabiler Schmelzen durch längere Verweilzeiten von Einzelmengen besteht und für die Extrusion ein weitgehend gleich temperierter, homogener Schmelzenstrom aufbereitet wird.

Besonders gute Mischeffekte sind erzielbar, wenn die Teilströme um einen Drehwinkel α verdreht werden, der zwischen ca. 90° und 180°C liegt, wobei die Drehrichtung gleich- oder abwechselnd gegensinnig sein kann, und wenn der Schmelzenstrom in vier bis zwölf Teilströme aufgeteilt wird. Durch die gewählte Anzahl der Teilströme gibt es ausreichende Kontaktbereiche, und die räumlichen Änderungen der Schmelzenteile erfolgen über entsprechend weite Entfernungen. Außerdem bleiben die Teilquerschnitte groß genug, um den Druckbedarf beim Durchströmen gering zu halten, so daß es auch möglich ist, das Durchmischen in zwei oder mehreren Schritten hintereinander vorzunehmen. Selbstverständlich läßt sich dieses Mischverfahren auch mit anderen bekannten Verfahren kombinieren, um beispielsweise den wiedervereinigten Schmelzenstrom über den Strömungsquerschnitt zu vergleichmäßigen und die Spuren der Teilströme zu verwischen, wozu vor allem ein Mischeffekt in Umfangsrichtung wichtig ist.

Zum Durchführen des Mischverfahrens wird ein Mischer mit einem in einen Strömungskanal einbindbaren Mischkörper vorgeschlagen, wobei der Mischkörper sich von einem Einlaß zu einem Auslaß erstreckende Mischkanäle mit einer Dralleinrichtung aufweist. Dieser Mischer erlaubt durch seine Mischkanäle die einwandfreie Aufteilung des Schmelzenstromes in entsprechend viele Teilströme und die Dralleinrichtung der Mischkanäle sorgt für die gewünschte Verdrehung der Teilströme innerhalb der Mischkanäle, wodurch Schmelzenteilchen aus dem Mittenbereich nach außen gefördert werden und außenliegende Teilchen in umgekehrter Richtung in den Mittenbereich, so daß der gewünschte radiale Mischeffekt entsteht.

Besitzen die Mischkanäle im wesentlichen runde Querschnitte und weisen als Dralleinrichtung wenigstens eine entlang einer Schraubenlinie an der Mantelfläche verlaufende Nut und/oder Rippe auf, kommt es beim Durchströmen der Mischkanäle zu einer Verschraubung der Teilströme und damit zur angestrebten Mischwirkung.

Besonders vorteilhaft ist es aber, wenn die Mischkanäle im wesentlichen polygonale, sich in Kanallängsrichtung verdrehende Querschnitte als Dralleinrichtung aufweisen, so daß der Verlauf und die Querschnittform der Mischkanäle selbst für die Verdrehung der Teilströme sorgen. Dabei spielt es an sich nur eine untergeordnete Rolle, welche Querschnittsformen für die Mischkanäle vorgesehen sind, aus Herstellungsgründen empfiehlt sich jedoch ein dreieckiger Querschnitt, der sich gut in den Rund- oder auch Polygonalquerschnitt des Ein- und Auslaßes einordnen läßt. Selbstverständlich könnten als Ausgangsquerschnitte aber auch andere Querschnittsformen, wie quadratische, fünf- oder sechseckige Querschnitte od. dgl. vorgesehen sein.

Zweckmäßigerweise sind Einlaß und Auslaß durch Radialwände in mehrere Ein- und Auslaßöffnungen unterteilt, welche einander paarweise zugeordneten Ein- und Auslaßöffnungen durch die Mischkanäle miteinander verbunden sind. So werden die Ein- und Auslaßöffnungen nur durch Ein- oder Austrittskanten begrenzt und liegen eng nebeneinander, so daß die Aufteilung bzw. die Vereinheitlichung des Schmelzenstromes im Ein- und Auslaßbereich ohne Stau- oder Stagnationszonen erfolgen können.

Besteht die Innenmantelfläche der Mischkanäle aus geraden Erzeugenden, die schräg zur geraden Kanalachse verlaufen und die Ein- bzw. Auslaßkonturen der zugehörenden Ein- und Auslaßöffnungen verbinden, entsteht ein Mischer, der sich rationell mit Hilfe des Drahterodierens herstellen läßt.

Die Mischkanäle mit den im wesentlichen polygonalen, sich in Kanallängsrichtung verdrehenden Querschnitten sind ohne größeren Druckbedarf von den Teilströmen durchströmbar, so daß zur Erhöhung der Mischwirkung auch zwei oder mehrere gegeneinander um die Durchströmrichtung winkelversetzte Mischkörper hintereinandergereiht werden können, wobei Versuche mit vier hintereinandergereihten Mischkörpem sehr gut Mischergebnisse gezeigt haben. Der Winkelversatz der Mischkörper gewährleistet dabei eine entsprechende Verstärkung der Mischwirkung und verhindert eine bloße Vergrößerung des Verdrehwinkels der Teilströme.

Ein solcher Mischer läßt sich auch bestens mit herkömmlichen Mischern kombinieren, um beispielsweise durch ein Mischen in Umfangsrichtung die Vereinigung der Teilströme zum Schmelzenstrom zu vergleichmäßigen.

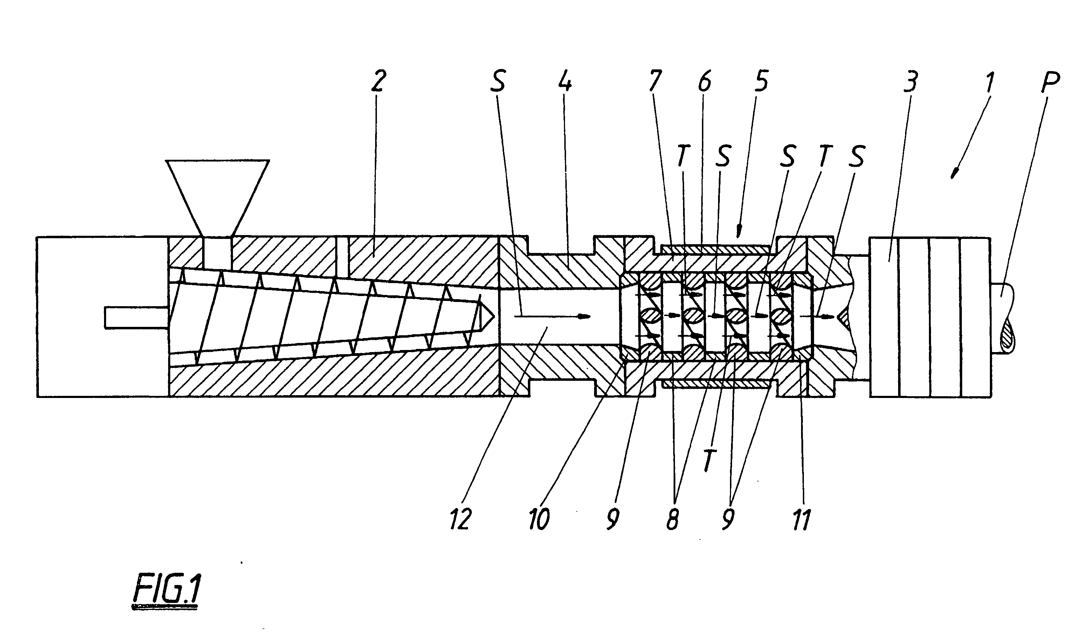

In der Zeichnung ist der Erfindungsgegenstand rein schematisch veranschaulicht, und zwar zeigen
- Fig. 1: eine Extrusionsanlage mit erfindungsgemäßen Mischern in teilgeschnittener Seitenansicht,

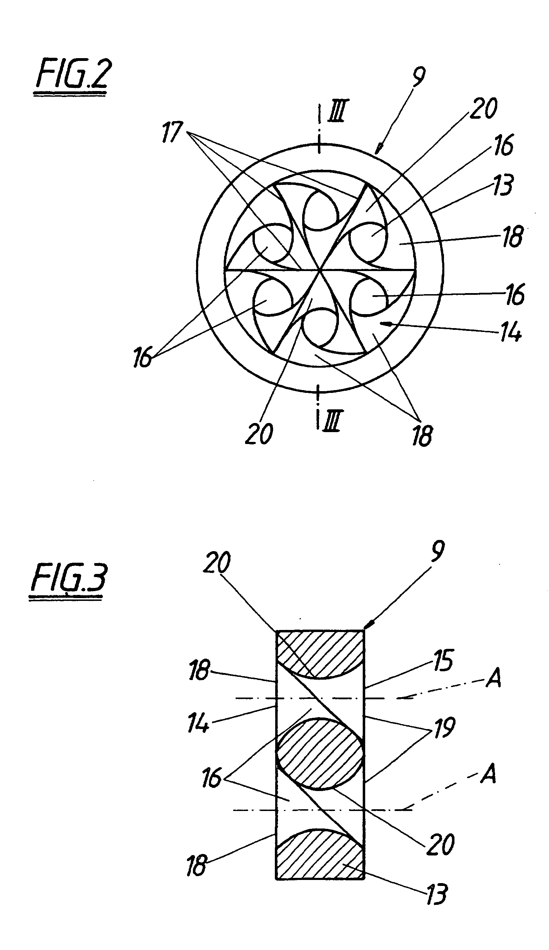

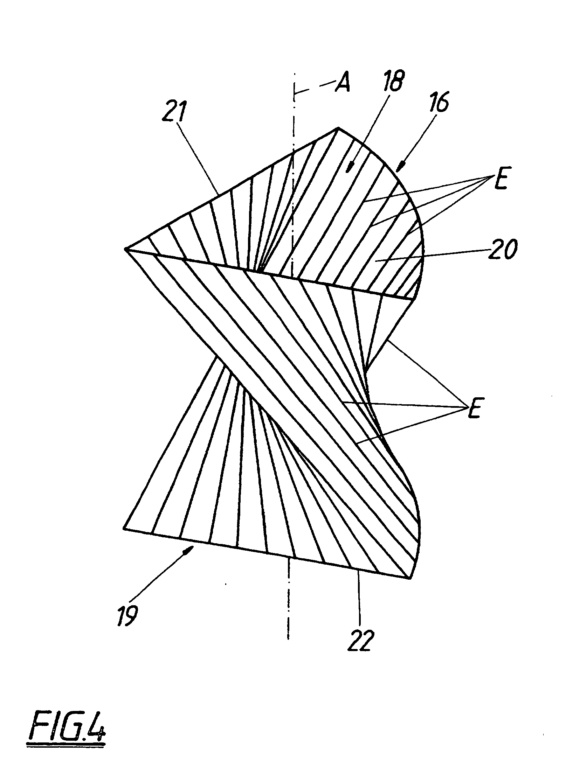

- Fig. 2 und 3: einen erfindungsgemäßen Mischer in Stirnansicht bzw. im Axialschnitt nach der Linie III-III der Fig. 2 sowie
- Fig. 4: einen Mischkanal eines Mischers in Form eines Drahtmodells im Schaubild.

Eine nur teilweise veranschaulichte Extrusionsanlage 1 zur Herstellung von Profilen P aus Polyvinylchlorid (PVC) umfaßt einen Extruder 2 und eine Extrusionsdüse 3, wobei zwischen Extrusionsdüse 3 und einem an den Extruder 2 angeschlossenen Adapter 4 eine Mischvorrichtung 5 zum Durchmischen des Schmelzstromes S aus PVC angeordnet ist. Die Mischvorrichtung 5 weist ein über eine Heizeinrichtung 6 beheizbares Gehäuse 7 auf, in dem unter Zwischenlage von Distanzringen 8 vier Mischer 9 hintereinandergereiht sind, die sich über ein Einlaßstück 10 und ein Auslaßstück 11 in den Strömungskanal 12 für den Schmelzenstrom S einbinden lassen.

Die Mischer 9 bestehen jeweils aus einem scheibenförmigen Mischkörper 13, der sich von einem Einlaß 14 zu einem Auslaß 15 axial erstreckende Mischkanäle 16 mit einem im wesentlichen dreieckigen, sich in Richtung der Kanalachse A verdrehenden Querschnitt als Dralleinrichtung bildet. Einlaß 14 und Auslaß 15 sind durch Radialwände 17 in mehrere Ein- und Auslaßöffnungen 18, 19 unterteilt, die jeweils paarweise durch die Mischkanäle 16 miteinander in Verbindung stehen. Die Innenmantelfläche 20 der Mischkanäle 16 ergibt sich aus geraden Erzeugenden E, die schräg zur geraden Kanalachse A verlaufen und die Ein- bzw. Auslaßkonturen 21, 22 der zugehörenden Ein- und Auslaßöffnungen 18, 19 verbinden.

Durch die Mischer 9 wird der Schmelzenstrom S jeweils in sechs Teilströme T aufgeteilt, welche Teilströme T aufgrund der sich in Achsrichtung verdrehenden Mischkanalquerschnitte selbst verdrehen und dann wieder zu einem gemeinsamen Schmelzenstrom S vereint werden. Dadurch ergibt sich ein radialer Mischeffekt ohne Stagnationszonen, der zu einer Homogenisierung des Schmelzenstromes führt und die örtlichen Unterschiede der Massetemperatur weitgehend ausgleicht, so daß der Extrusionsdüse 3 eine weitgehend gleichtemperierte Schmelze bereitgestellt wird.

## Patentansprüche

1. Verfahren zum Durchmischen eines Schmelzenstromes aus Kunststoff, insbesondere Polyvinylchlorid (PVC), **dadurch gekennzeichnet, daß** der Schmelzenstrom in Teilströme aufgeteilt wird, welche Teilströme jeweils unabhängig voneinander um in Strömungsrichtung verlaufende Achsen verdreht und dann wieder zu einem gemeinsamen Schmelzenstrom vereint werden.

2. Verfahren nach Anspruch 1, **dadurch gekennzeichnet, daß** die Teilströme um einen Drehwinkel a verdreht werden, der zwischen ca. 90° und 180° liegt.

3. Verfahren nach Anspruch 1 oder 2, **dadurch gekennzeichnet, daß** der Schmelzenstrom in vier bis zwölf Teilströme aufgeteilt wird.

4. Mischer zur Durchführung des Verfahrens nach einem der Ansprüche 1 bis 3 mit einem in einen Strömungskanal einbindbaren Mischkörper, **dadurch gekennzeichnet, daß** der Mischkörper (13) sich von einem Einlaß zu einem Auslaß (15) erstreckende Mischkanäle (16) mit einer Dralleinrichtung aufweist.

5. Mischer nach Anspruch 4, **dadurch gekennzeichnet, daß** die Mischkanäle im wesentlichen runde Querschnitte besitzen und als Dralleinrichtung wenigstens eine entlang einer Schraubenlinie an der Mantelfläche verlaufende Nut und/oder Rippe aufweisen.

6. Mischer nach Anspruch 4, **dadurch gekennzeichnet, daß** die Mischkanäle (16) im wesentlichen polygonale, sich in Kanallängsrichtung verdrehende Querschnitte als Dralleinrichtung aufweisen.

7. Mischer nach Anspruch 6, **dadurch gekennzeichnet, daß** Einlaß (14) und Auslaß (15) durch Radialwände (17) in mehrere Ein- und Auslaßöffnungen (18,19) unterteilt sind, welche einander paarweise zugeordneten Ein- und Auslaßöffnungen (18,19) durch die Mischkanäle (16) miteinander verbunden sind.

8. Mischer nach Anspruch 6, **dadurch gekennzeichnet, daß** die Innenmantelfläche (20) der Mischkanäle (16) aus geraden Erzeugenden (E) besteht, die schräg zur geraden Kanalachse (A) verlaufen und die Ein- bzw. Auslaßkonturen (21,22) der zugehörenden Ein- und Auslaßöffnungen (18,19) verbinden.

9. Mischer nach einen der Ansprüche 4 bis 6, **dadurch gekennzeichnet, daß** wenigstens zwei gegeneinander um die Durchströmrichtung winkelversetzte Mischkörper hintereinandergereiht sind.

## Claims

1. A process for mixing a melt stream of plastic, particularly of polyvinyl chloride (PVC), **characterised in that** the melt stream is divided into sub-streams, which are each twisted independently of one another about axes extending in the direction of flow, and are then re-combined to form a common melt stream.

2. A process according to claim 1, **characterised in that** the sub-streams are twisted about an angle α of between approximately 90° and 180°.

3. A process according to claim 1 or 2, **characterised in that** the melt stream is divided up into 4 to 12 sub-streams.

4. A mixer for performing the process according to any one of claims 1 to 3, with a mixing body which can be introduced into a flow duct, **characterised in that** the mixing body (13) has mixing ducts (16) which extend from an inlet to an outlet (15) and which have a twisting means.

5. A mixer according to claim 4, **characterised in that** the mixing ducts have substantially round cross-sections and comprise as twisting means at least one groove and/or rib extending along a helix on the surface.

6. A mixer according to claim 4, **characterised in that** the mixing ducts (16) have, as twisting means, substantially polygonal cross-sections which twist in the duct longitudinal direction.

7. A mixer according to claim 6, **characterised in that** the inlet (14) and outlet (15) are divided by radial walls (17) into a plurality of inlet and outlet openings (18, 19) which inlets and outlet openings (18, 19) associated in pairs are interconnected by the mixing ducts (16).

8. A mixer according to claim 6, **characterised in that** the inner surface (20) of the mixing ducts (16) consists of straight generatrices (E) which extend at an angle to the straight duct axis (A) and connect the inlet and outlet contours (21, 22) of the associated inlet and outlet openings (18, 19).

9. A mixer according to any one of claims 4 to 6, **characterised in that** at least two mixing bodies angularly offset from one another about the direction of flow are disposed in series.

## Revendications

1. Procédé de mélange d'un flux de masse fondue en matière synthétique, en particulier de polychlorure de vinyle (PVC), **caractérisé en ce que** le flux de masse fondue est subdivisé en flux partiels, lesdits flux partiels étant chacun tournés, indépendamment des autres, autour d'axes s'étendant dans la direction d'écoulement, et étant ensuite réunifiés pour former un flux de masse fondue commun.

2. Procédé selon la revendication 1, **caractérisé en ce que** les flux partiels sont tournés d'un angle de rotation α, compris entre environ 90° et 180°.

3. Procédé selon la revendication 1 ou 2, **caractérisé en ce que** le flux de masse fondue est subdivisé en un nombre de quatre à douze flux partiels.

4. Mélangeur pour la mise en oeuvre du procédé selon l'une des revendications 1 à 3, avec un corps mélangeur, susceptible d'être intégré dans le canal d'écoulement, **caractérisé en ce que** le corps mélangeur (13) présente des canaux de mélange (16) s'étendant depuis une admission jusqu'à une évacuation (15), canaux présentant un dispositif de mise en rotation.

5. Mélangeur selon la revendication 4, **caractérisé en ce que** les canaux de mélange présentent des sections transversales sensiblement rondes, et présentent, à titre de dispositif de mise en rotation, au moins une rainure et/ou une nervure, s'étendant le long d'une ligne hélicoïdale sur la surface d'enveloppe.

6. Mélangeur selon la revendication 4, **caractérisé en ce que** les canaux de mélange (16) présentent des sections transversales, faisant office de dispositif de mise en rotation et à forme sensiblement polygonale, tournant dans la direction longitudinale des canaux.

7. Mélangeur selon la revendication 6, **caractérisé en ce que** l'admission (14) et l'évacuation (15) sont subdivisées, au moyen de parois radiales (17), en plusieurs ouvertures d'admission et d'évacuation (18, 19), lesdites ouvertures d'admission et d'évacuation (18, 19) étant reliées ensemble par paires, au moyen des canaux de mélange (16).

8. Mélangeur selon la revendication 6, **caractérisé en ce que** la surface d'enveloppe intérieure (20) des canaux de mélange (16) est formée de génératrices (E) rectilignes, s'étendant obliquement par rapport à l'axe de canal (A) rectiligne et reliant les contours d'admission respectivement d'évacuation (21, 22) des ouvertures d'admission et d'évacuation (18, 19) afférentes.

9. Mélangeur selon l'une des revendications 4 à 6, **caractérisé en ce qu'**au moins deux corps mélangeurs, décalés angulairement l'un par rapport à l'autre, autour de la direction de passage de l'écoulement, sont alignés les uns derrière les autres.
